**Europäisches Patentamt**

**European Patent Office**

**Office européen des brevets**

(19)

(11) Numéro de publication: **0 176 414**
**B1**

# FASCICULE DE BREVET EUROPEEN

(12)

(45) Date de publication du fascicule du brevet:
**19.04.89**

(51) Int. Cl.⁴: **G01F 11/28, B01J 47/10**

(21) Numéro de dépôt: **85401726.6**

(22) Date de dépôt: **05.09.85**

(54) **Procédé de dosage et de transfert d'un produit en grains et installation correspondante.**

(30) Priorité: **11.09.84 FR 8413935**

(43) Date de publication de la demande:
**02.04.86 Bulletin 86/14**

(45) Mention de la délivrance du brevet:
**19.04.89 Bulletin 89/16**

(84) Etats contractants désignés:
**AT BE CH DE FR GB IT LI LU**

(56) Documents cités:
**FR-A- 1 356 553**
**US-A- 2 770 395**
**US-A- 4 088 563**
**US-A- 4 461 710**

(73) Titulaire: **TECHNICATOME Société Technique pour l'Energie Atomique, 29, rue de la Fédération, F-75015 Paris(FR)**

(72) Inventeur: **Raibaud, Jean, 81, rue Jean Roger Thorelle, F-92340 Bourg La Reine(FR)**

(74) Mandataire: **Mongrédien, André et al, c/o BREVATOME 25, rue de Ponthieu, F-75008 Paris(FR)**

ACTORUM AG

## Description

La présente invention se rapporte à un nouveau procédé de dosage d'un produit en grains, puis de transfert de ce produit dans un réservoir, ainsi qu'à une installation permettant de mettre en œuvre ce procédé.

Les procédés utilisés habituellement pour doser un certain volume de produit se présentant sous la forme de grains de différentes tailles sont le plus souvent imprécis et difficiles à mettre en œuvre, notamment lorsque le transfert du produit jusqu'au pot de dosage est réalisé en mélangeant le produit avec un liquide de transfert tel que de l'eau. Le document US-A 4 461 710 décrit un procédé et un appareil utilisant un pot doseur muni d'un écran perforé, dans lequel l'arrivée du produit en grains est interrompue lorsque la pression dans le pot dépasse une valeur donnée.

La présente invention a principalement pour objet un procédé et une installation de dosage particulièrement simples assurant sans aucun risque un dosage précis d'un produit en grains.

La présente invention a également pour objet un procédé et une installation permettant de transférer le produit dosé depuis le pot de dosage jusqu'à un réservoir annexe en utilisant une quantité de liquide de transfert particulièrement faible, en supprimant les effluents et en assurant sans difficulté un transfert précis et rapide de l'ensemble du produit dosé.

En outre, l'invention s'applique indifféremment au dosage et au transfert de tous produits en grains, quelle que soit la nature du produit et quelle que soit sa granulométrie. Ainsi, l'invention peut s'appliquer au dosage et au transfert des résines échangeuses d'ions usées provenant des pots d'épuration des circuits primaires des réacteurs nucléaires à eau sous pression et des piscines de stockage des combustibles, aussi bien que dans les industries chimique, pharmaceutique ou agro-alimentaire.

Le nouveau procédé conforme à l'invention de dosage d'un produit en grains dans un pot doseur, consistant à introduire ce produit mélangé à un liquide de transfert dans le pot doseur, en-dessous d'un organe de retenue ajouré, à contrôler la pression du liquide de transfert introduit dans le pot doseur et à arrêter l'introduction du produit mélangé au liquide de transfert lorsque ladite pression dépasse un seuil indiquant la venue du produit en contact avec ledit organe de retenue; ce procédé étant caractérisé en ce que, au cours du dosage, on évacue le liquide de transfert lorsqu'il dépasse un niveau donné au-dessus dudit organe de retenue, et en ce qu'il comprend de plus les étapes successives suivantes:

– transfert du produit ainsi dosé et du liquide de transfert du pot doseur dans le réservoir par une conduite en U renversé formant siphon débouchant dans le fond du pot doseur et à la partie supérieure du réservoir, ce dernier étant placé sensiblement au même niveau que le pot doseur, en injectant un fluide gazeux sous pression dans le pot doseur au-dessus dudit organe de retenue;

– assèchement du produit ainsi transféré par pompage du liquide de transfert du réservoir dans le pot doseur par une conduite dont une extrémité débouchant dans le fond du réservoir comporte des moyens de filtrage empêchant le passage du produit en grains.

De préférence, on contrôle l'assèchement du produit en mesurant le volume de liquide de transfert renvoyé dans le pot doseur.

L'invention a également pour objet une installation de dosage et de transfert permettant de mettre en œuvre le procédé de dosage et de transfert défini précédemment.

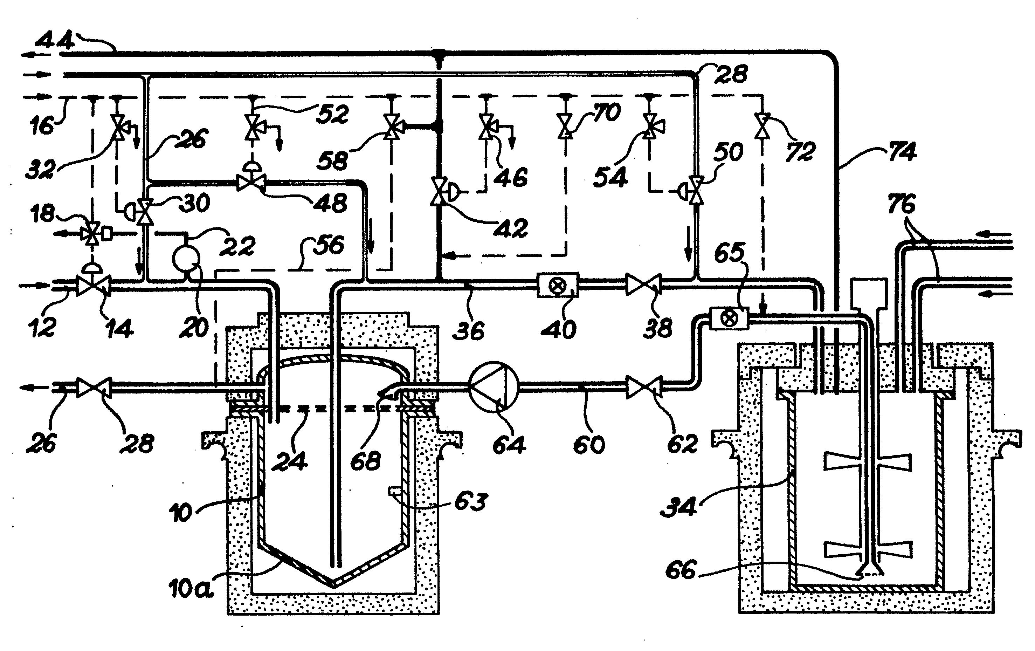

On décrira maintenant, à titre d'exemple non limitatif, un mode de réalisation préféré d'une installation de dosage et de transfert mettant en œuvre le procédé selon l'invention en se référant à la figure unique qui représente cette installation de façon schématique et en coupe partielle.

L'installation représentée sur la figure est destinée à réaliser le dosage de résines échangeuses d'ions usées provenant soit des pots d'épuration des circuits primaires de réacteurs nucléaires à eau sous pression, soit de piscines de stockage de combustibles nucléaires, soit de tout autre circuit, puis à transférer ces résines usées dans un réservoir constitué dans ce cas par un malaxeur servant à immobiliser les résines dosées dans un liant organique, pour en réaliser l'enrobage. Toutefois, une installation comparable pourrait être utilisée pour doser et transférer tout autre produit en grains, par exemple dans l'industrie chimique ou dans l'industrie agro-alimentaire.

Dans l'installation représentée, les résines en grains (par exemple de 0,2 à 1,2 mm) sont amenées dans un pot doseur 10 par une canalisation d'arrivée 12 contrôlée par une vanne 14 à commande pneumatique. Afin d'assurer leur transfert, les résines sont mélangées à un liquide de transfert constitué de préférence par de l'eau déminéralisée. La vanne 14 est reliée à une ligne d'air comprimé 16 par l'intermédiaire d'une électrovanne trois voies 18 qui en assure la commande. Un pressostat 20 mesure la pression dans la canalisation d'arrivée 12, entre la vanne 14 et le pot doseur 10. Le pressostat 20 est relié à l'électrovanne 18 par une ligne électrique 22 permettant d'actionner l'électrovanne lorsque la pression dans la canalisation 12 dépasse un seuil déterminé.

A proximité de son dôme supérieur, le pot doseur 10 est équipé d'une grille de retenue perforée 24, disposée horizontalement et sous laquelle débouche l'extrémité de la canalisation d'arrivée 12. Conformément à l'invention, les perforations formées dans la grille 24 sont telles qu'elles retiennent les résines en grains tout en laissant passer l'eau déminéralisée qui en assure le transfert.

Une canalisation de sortie 26 équipée d'une vanne 28 débouche dans le pot doseur 10 au-dessus de la grille de retenue 24.

Grâce à la structure de l'installation qui vient d'être décrite, on conçoit qu'il est possible de doser dans d'excellentes conditions et de façon simple un volume de résines échangeuses d'ions usées correspondant au volume défini à l'intérieur du pot 10 en-dessous de la grille 24.

En effet, la vanne 28 étant ouverte et l'opérateur commandant par l'intermédiaire de l'électrovanne 18 l'ouverture de la vanne pneumatique 14, les résines mélangées à leur eau de transfert pénètrent en continue dans le pot doseur 10. Tant que le niveau des résines dans le pot 10 n'atteint pas la grille 24, la pression détectée par le pressostat 20 reste inférieure au seuil de déclenchement de l'électrovanne 18 et la vanne 14 reste ouverte. L'eau de transfert traverse alors librement la grille 24 pour être évacuée par la canalisation de sortie 26 sans aucune augmentation notable de la perte de charge dans la canalisation 12.

Dès que le niveau de résines dans le pot doseur 10 atteint le niveau de la grille 24, qui empêche le passage des résines, une réduction notable de la vitesse des résines dans la canalisation d'arrivée 12 se produit et conduit à un accroissement temporaire de la pression dans cette canalisation, au-delà du seuil défini par le pressostat 20. Cela a immédiatement pour effet d'agir sur l'électrovanne 18 afin de fermer la vanne 14 en relâchant la pression appliquée sur celle-ci. Un dosage précis de la résine est effectué, notamment lorsque la vitesse dans la canalisation 12 est voisine de 1,5 m/s.

Une canalisation de vidange 26 de la tuyauterie d'arrivée 12 relie celle-ci, immédiatement en aval de la vanne 14, à une ligne d'eau déminéralisée 28. Cette canalisation 26 est contrôlée par une vanne à commande pneumatique 30, normalement fermée, qui communique avec la ligne d'air comprimé 16 par l'intermédiaire d'une électrovanne trois voies 32.

La canalisation 26 débouche dans le pot 10 à un niveau choisi de façon telle que le volume d'eau présent dans le pot lorsque le dosage est terminé permette de réaliser ensuite le transfert de la résine vers un réservoir malaxeur 34 dans des conditions optimales. Ainsi, par exemple, pour 100 l de résine dosée dans le pot 10, contenant 30 l d'eau interstitielle, la canalisation 26 permet à un volume d'eau "surnageante" de 40 l d'être présent au-dessus de la grille 24.

Après remplissage du pot doseur 10 et fermeture automatique de la vanne 14, la partie de la canalisation 12 située en aval de cette dernière est balayée par de l'eau déminéralisée en provenance de la ligne 28 après ouverture de la vanne 30 commandée par l'électrovanne 32. On chasse ainsi les résines situées dans cette partie de la tuyauterie 12. Lorsque cette opération est terminée, la vanne 30 est à nouveau fermée et l'opérateur ferme la vanne 28, de telle sorte que le pot doseur 10 se trouve isolé par rapport à la partie de l'installation (non représentée) qui se trouve en amont.

L'installation représentée sur la figure comprend de plus des moyens pour transférer de façon simple, efficace et sans effluent les résines dosées qui se trouvent dans le pot 10 jusqu'au réservoir malaxeur 34 dans lequel pourra être réalisé ultérieurement l'enrobage des résines.

Comme l'illustre la figure, le pot doseur 10 et le malaxeur 34 se trouvent placés sensiblement au même niveau et ils sont reliés par une conduite 36 en U renversé formant siphon, dont une première extrémité descend verticalement le long de l'axe du pot 10 jusqu'au niveau du fond conique 10a en forme de trémie, d'angle voisin de 120° de ce pot 10. Le jeu entre l'extrémité inférieure de la conduite 36 et le fond 10a du pot 10 est, de préférence, égal au diamètre intérieur de la conduite 36. L'extrémité opposée de la conduite 36 traverse la tête du malaxeur 34 pour déboucher à la partie haute de celui-ci. La conduite 36 est équipée d'une vanne 38 et d'un contrôleur de circulation 40.

La partie horizontale supérieure de la conduite 36 est reliée par l'intermédiaire d'une vanne 42 à commande pneumatique (normalement fermée) à une ligne 44 d'évacuation des effluents gazeux. Une électrovanne 46 est interposée entre la ligne d'air comprimé 16 et la vanne 42 afin de commander cette dernière.

A proximité de chacune de ses extrémités, la partie supérieure horizontale de la conduite 36 est également reliée à la ligne d'eau déminéralisée 28 par l'intermédiaire de deux vannes 48 et 50 à commande pneumatique (normalement fermées). Ces vannes sont commandées par la ligne d'air comprimé 16, respectivement par l'intermédiaire de deux électrovannes 52 et 54.

Une canalisation 56 contrôlée par une électrovanne trois voies 58 relie alternativement la ligne d'air comprimé 28 et la ligne d'effluents gazeux 44 à la canalisation de sortie 26 de l'eau de transfert, en amont de la vanne 28 et à proximité immédiate du pot doseur 10.

Le pot doseur 10 et le malaxeur 34 communiquent également par une canalisation 60 équipée d'une vanne 62 (normalement fermée) et d'une pompe 64. Cette canalisation 60 sert à ramener l'eau de transfert depuis le malaxeur vers le pot doseur, afin d'assécher la résine introduite dans le malaxeur. Cette canalisation 60 descend le long de l'axe du malaxeur 34 pour déboucher dans le fond de celui-ci par une crépine 66 empêchant le passage des résines dans la canalisation 60. L'autre extrémité de cette dernière débouche dans le pot doseur 10 par une buse 68 située au-dessus de la grille 24. Un contrôleur de circulation 65 est également placé dans la canalisation 60. Un indicateur de niveau 63 placé dans le pot doseur permet de contrôler le volume d'eau renvoyé par la pompe 64 dans le pot doseur et, par conséquent, de vérifier que les résines ont été correctement asséchées.

Des vannes 70 et 72 (normalement fermées) permettent de faire communiquer chacune des canalisations 36 et 60 avec la ligne d'air comprimé 16.

Enfin, une canalisation 74 traversant la tête du malaxeur 34 permet d'évacuer de celui-ci les effluents gazeux vers la ligne 44 et une ou plusieurs canalisations 76 traversant également la tête du malaxeur 34 permettent d'amener dans celui-ci le liant organique destiné à l'enrobage.

Lorsque le dosage de la résine dans le pot 10 est effectué, les vannes 38 et 62 sont fermées et la vanne 58 occupe la position dans laquelle la canalisation 56 communique avec la ligne 44 d'effluents gazeux.

Lorsque le pot doseur 10 a été rempli de résines et isolé de l'installation située en amont par la fermeture des vannes 14, puis 28, le transfert de ces résines dans le malaxeur 34 peut être effectué.

Avant de commander le transfert, l'opérateur ouvre les vannes 38 et 62 afin de mettre en communication le pot et le malaxeur. Le transfert proprement dit est commandé par l'actionnement de l'électrovanne 58 qui permet, par l'intermédiaire de la canalisation 56, d'injecter dans la partie supérieure du pot 10 situé au-dessus de la grille 24 de l'air comprimé en provenance de la ligne 28. L'air comprimé admis dans le pot 10 au-dessus du mélange eau-résine qui se trouve dans celui-ci a pour effet de chasser ce mélange vers le malaxeur 34 par la canalisation 36. Simultanément, les gaz contenus dans le malaxeur sont évacués vers la ligne 44 par la canalisation 74. Compte tenu de la structure de la canalisation 36, il se produit dans celle-ci un effet de siphon qui s'ajoute à la pression exercée par l'air comprimé sur le mélange résine-eau dans le pot doseur 10.

Il est à noter que le transfert ainsi réalisé s'effectue de façon relativement homogène, de telle sorte que l'ensemble de la résine est transféré dans le malaxeur, ce qui n'est pas le cas dans les dispositifs connus dans lesquels on utilise des pompes qui transfèrent le liquide plus rapidement que le solide et provoquent ainsi une accumulation de ce dernier, dont une partie reste non transférée en fin de cycle. De plus, le principe du siphonnage du mélange par une tubulure centrale permet d'utiliser une quantité d'eau réduite au minimum et de ne pas rejeter d'effluents.

La fin du transfert est détectée par l'indicateur 40 qui met en route automatiquement la pompe d'assèchement 64 afin de transférer depuis le malaxeur 34 jusqu'au pot doseur 10 l'eau déminéralisée mélangée aux résines. La qualité de l'essorage est contrôlée en mesurant la quantité d'eau transférée dans le pot doseur à l'aide de l'indicateur de niveau 63.

Simultanément, l'opérateur casse le siphon formé dans la canalisation 36 en actionnant l'électrovanne 46 pour ouvrir la vanne 42 et la canalisation 36 est rincée à l'eau déminéralisée par ouverture des vannes 48 et 50 commandées à l'aide des électrovannes 52 et 54.

Lorsque l'indicateur 65 placé dans la canalisation 60 détecte la fin de l'assèchement, l'opérateur arrête la pompe 64 et souffle les canalisations 36 et 60 par ouverture des électrovannes 70 et 72.

Bien entendu, l'invention n'est pas limitée au mode de réalisation qui vient d'être décrit, mais en couvre toutes les variantes. Ainsi, il est clair que selon l'application envisagée, le malaxeur 34 peut être remplacé par exemple par un réservoir de stockage ou par un réservoir d'un tout autre type. Par ailleurs, les différentes vannes à commande pneumatique décrites peuvent être remplacées par des vannes d'un autre type, et notamment par des vannes manuelles ou par des électrovannes, sans sortir du cadre de l'invention.

## Revendications

1. Procédé de dosage d'un produit en grains dans un pot doseur (10), consistant à introduire ce produit mélangé à un liquide de transfert dans le pot doseur (10), en-dessous d'un organe de retenu ajouré (24), à contrôler la pression du liquide de transfert introduit dans le pot doseur et à arrêter l'introduction du produit mélangé au liquide de transfert lorsque ladite pression dépasse un seuil indiquant la venue du produit en contact avec ledit organe de retenue; ce procédé étant caractérisé en ce que, au cours du dosage, on évacue le liquide de transfert lorsqu'il dépasse un niveau donné au-dessus dudit organe de retenue, et en ce qu'il comprend de plus les étapes successives suivantes:
   – transfert du produit ainsi dosé et du liquide de transfert du pot doseur (10) dans le réservoir (34) par une conduite (36) en U renversé formant siphon débouchant dans le fond (10a) du pot doseur (10) et à la partie supérieure de réservoir (34), ce dernier étant placé sensiblement au même niveau que le pot doseur, en injectant un fluide gazeux sous pression dans le pot doseur au-dessus dudit organe de retenue (24);
   – assèchement du produit ainsi transféré par pompage du liquide de transfert du réservoir (34) dans le pot doseur (10) par une conduite (60) dont une extrémité débouchant dans le fond du réservoir (34) comporte des moyens de filtrage (66) empêchant le passage du produit en grains.

2. Procédé selon la revendication 1, caractérisé en ce qu'on contrôle l'assèchement du produit en mesurant le volume de liquide de transfert renvoyé dans le pot doseur (10).

3. Installation de dosage d'un produit en grains, comprenant un pot doseur (10) équipé en partie haute d'un organe de retenue (24) ajouré, une canalisation d'arrivée (12) du produit mélangé à un liquide de transfert, cette canalisation (12) débouchant dans le pot en-dessous dudit organe de retenue (24), des moyens (20) pour comparer la pression dans ladite canalisation d'arrivée (12) à un seuil donné correspondant à la venue du produit en contact avec ledit organe de retenue (24), des moyens (18, 14) contrôlés par lesdits moyens de comparaison de pression, pour fermer ladite canalisation d'arrivée (12) lorsque la pression dépasse ledit seuil, cette installation étant caractérisée en ce qu'elle comprend de plus une canalisation d'évacuation (26) du liquide de transfert débouchant dans le pot (10) au-dessus dudit organe de retenue (24), un réservoir (34) disposé sensiblement au même niveau que le pot doseur (10), une conduite (36) en U renversé formant siphon débouchant dans le fond du pot doseur (10) et à la partie supérieure du réservoir (34), une canalisation (56) d'injection d'un fluide gazeux sous pression débouchant dans le pot doseur (10), au-dessus dudit organe de retenue (24), et une conduite (60) d'assèchement dudit produit reliant le fond du réservoir (34) au pot doseur (10) et comportant des moyens de pompage (64) du liquide de transfert et, à son extrémité située dans le fond du réservoir, des moyens de filtrage (66) empêchant le passage dudit produit en grains.

4. Installation selon la revendication 3, caractérisée en ce qu'elle comprend de plus des moyens (63) pour mesurer le volume du liquide de transfert transféré du réservoir (34) dans le pot doseur (10) par ladite conduite (60).

5. Installation selon l'une quelconque des revendications 3 et 4, caractérisée en ce que le fond du pot doseur (10) est conique et fait un angle d'environ 120°.

6. Installation selon l'une quelconque des revendications 3 à 5, caractérisée en ce que l'extrémité de ladite conduite (36) en U renversé formant siphon débouchant dans le fond du pot doseur (10) est espacé de ce fond d'une distance approximativement égale au diamètre intérieur de cette conduite.

## Claims

1. Process for dosing a granular product in a dosing chamber (10) comprising introducing said product mixed with a transfer liquid into the dosing chamber (10), below a perforated retaining member (24), checking the pressure of the transfer liquid introduced into the dosing chamber and stopping the introduction of the product mixed with the transfer liquid when said pressure exceeds a threshold indicating that the product is in contact with the retaining member; said process being characterized in that, during dosing, the transfer liquid is discharged when it exceeds a given value below said retaining member and in that it also comprises the following stages:
 — transferring the thus dosed product and the transfer liquid from the dosing chamber (10) into the tank (34) by means of an inverted U-shaped pipe (36) forming a siphon issuing into the bottom (10a) of the dosing chamber (10) and the upper part of the tank (34), the latter being placed substantially at the same level as the dosing chamber, whilst injecting a pressurized gaseous fluid into the dosing chamber above said retaining member (24);
 — and draining the thus transferred product by pumping the transfer liquid from the tank (34) into the dosing chamber (10) by a pipe (60), whereof one end which issues into the bottom of the tank (34) has filtering means (66) preventing the passage of the granular product.

2. Process according to claim 1, characterized in that the draining or drying of the product is checked by measuring the volume of transfer liquid discharged into the dosing chamber (10).

3. Installation for dosing a granular product incorporating a dosing chamber (10) equipped in the upper part with a perforated retaining member (24), a supply pipe (12) for the product mixed with a transfer liquid, said pipe (12) issuing into the chamber below said retaining member (24), means (20) for comparing the pressure in said supply pipe (12) with a given threshold corresponding to the contacting of the product with said retaining member (24), means (18, 14) checked by said pressure comparison means for closing the supply pipe (12) when the pressure exceeds said threshold, said installation also being characterized in that it comprises a pipe (26) for discharging the transfer liquid issuing into the chamber (10) above said retaining member (24), a tank (34) arranged substantially at the same level as the dosing chamber (10), an inverted U-shaped pipe (36) forming a siphon issuing into the bottom of the dosing chamber (10) and into the upper part of the tank (34), a pipe (50) for injecting a pressurized gaseous fluid issuing into the dosing chamber (10) above said retaining member (24) and a pipe (60) for draining said product linking the bottom of the tank (34) with the dosing chamber (10) and having transfer liquid pumping means (64) and at its end located in the bottom of the tank filtering means (66) preventing the passage of said granular product.

4. Installation according to claim 3, characterized in that it also comprises means (63) for measuring the volume of transfer liquid transferred from the tank (34) into the dosing chamber (10) by the draining pipe (60).

5. Installation according to either of the claims 3 or 4, characterized in that the bottom of the dosing chamber (10) is conical and forms an angle of approximately 120°.

6. Installation according to any one of the claims 3 to 5, characterized in that the end of the inverted U-shaped pipe (36) forming the siphon issuing into the bottom of the dosing chamber (10) is spaced from the latter by a distance approximately equal to the internal diameter of said pipe.

## Patentansprüche

1. Verfahren zum Dosieren eines körnigen Produkts in einem Dosiertopf (10), umfassend: Einführen des mit einer Übertragungsflüssigkeit vermischten Produkts in den Dosiertopf (10) unterhalb eines durchbrochenen Halteorgans (24), Regeln des Drucks der in den Dosiertopf eingeführten Übertragungsflüssigkeit und Abbrechen der Einführung des mit der Übertragungsflüssigkeit vermischten Produkts, wenn der genannte Druck einen Schwellenwert überschreitet, der angibt, daß das Produkt mit dem genannten Halteorgan in Berührung gelangt, dadurch gekennzeichnet, daß man im Verlauf der Dosierung die Übertragungsflüssigkeit abzieht, wenn sie ein über dem genannten Halteorgan vorgegebenes Niveau übersteigt, und daß das Verfahren darüber hinaus die folgenden aufeinanderfolgenden Schritte enthält:
 — Übertragung des so dosierten Produktes und der Übertragungsflüssigkeit aus dem Dosiertopf (10) in den Behälter (34) durch eine Leitung (36) umgekehrt U-förmigen Verlaufs, die einen Siphon bildet und am Boden (10a) des Dosiertopfes (10) und im oberen Abschnitt des Behälters (34) mündet, wobei letzterer im wesentlichen in gleicher Höhe wie der Dosiertopf angeordnet ist, wobei sie ein gasförmiges Fluid unter Druck in den Dosiertopf oberhalb des genannten Halteorgans (24) einleitet;
 — Trocknen des so übertragenen Produkts durch Pumpen der Übertragungsflüssigkeit vom Behälter (34) in den Dosiertopf (10) durch eine Leitung (60), von der ein Ende, das am Boden des Behälters (34) mündet, Filtereinrichtungen (66) aufweist, die den Durchgang des körnigen Produkts verhindern.

2. Verfahren nach Anspruch 1, dadurch gekennzeichnet, daß man das Trocknen des Produkts dadurch steuert, daß man das Volumen der in den Dosiertopf (10) überführten Übertragungsflüssigkeit mißt.

3. Dosiervorrichtung für ein körniges Produkt, enthaltend einen Dosiertopf (10), der in einem oberen Abschnitt mit einem gelochten Halteorgan (24) versehen ist, mit einer Einlaßleitung (12) für das mit einer Übertragungsflüssigkeit vermischte Produkt, welche Leitung (12) in dem Topf unterhalb des genannten Halteorgans (24) mündet, Einrichtungen (20) zum Vergleichen des Drucks in der genannten Einlaßleitung (12) mit einem vorgegebenen Grenzwert, der dem entspricht, wenn das Produkt mit dem genannten Halteorgan (24) in Berührung gelangt, Einrichtungen (18, 14), die durch die genannten Druckvergleichseinrichtungen gesteuert sind, um die genannte Einlaßleitung (12) zu verschließen, wenn der Druck den genannten Grenzwert überschreitet, dadurch gekennzeichnet, daß die Vorrichtung darüber hinaus enthält: eine Auslaßleitung (26) für die Übertragungsflüssigkeit, die in dem Topf (10) oberhalb des genannten Halteorgans (24) mündet, einen Behälter (34), der im wesentlichen in gleicher Höhe wie der Dosiertopf (10) angeordnet ist, eine Leitung (36) von umgekehrt U-förmigem Verlauf, die einen Siphon bildet und die am Boden des Dosiertopfes (10) und im oberen Bereich des Behälters (34) mündet, eine Einspritzleitung (56) für ein gasförmiges Druckfluid, die in dem Dosiertopf (10) oberhalb des genannten Halteorgans (24) mündet, und eine Trocknungsleitung (60) für das genannte Produkt, die den Boden des Behälters (34) mit dem Dosiertopf (10) verbindet und die Pumpeinrichtungen (64) für die Übertragungsflüssigkeit aufweist und an ihrem am Boden des Behälters gelegenen Ende mit Filtereinrichtungen (66) versehen ist, die den Durchgang des genannten körnigen Produkts verhindern.

4. Vorrichtung nach Anspruch 3, dadurch gekennzeichnet, daß sie darüber hinaus Einrichtungen (63) zum Messen des Volumens der Übertragungsflüssigkeit, die aus dem Behälter (34) in den Dosiertopf (10) durch die genannte Leitung (60) überführt wird, aufweist.

5. Vorrichtung nach einem der Ansprüche 3 und 4, dadurch gekennzeichnet, daß der Boden des Dosiertopfes (10) konisch ist und einen Winkel von etwa 120° bildet.

6. Vorrichtung nach einem der Ansprüche 3 bis 5, dadurch gekennzeichnet, daß das Ende der genannten, siphonbildenden Leitung von umgekehrt U-förmigem Verlauf, das am Boden des Dosiertopfes (10) mündet, von diesem Boden einen Abstand aufweist, der etwa gleich dem Innendurchmesser dieser Leitung ist.

EP 0 176 414 B1